# EUROPEAN PATENT APPLICATION

(11) **EP 3 385 577 A1**
(43) Date of publication of application: **10.10.2018**
(21) Application number: 16870716.4
(22) Date of filing: 30.11.2016
(51) Int. Cl.: F16J 15/18, F16J 15/48

(54) **SHAFT AND SEAL STRUCTURE**

(30) Priority: 03.12.2015 JP 2015236904
(71) Applicant: NOK Corporation, Minato-ku Tokyo 105-8585 (JP)
(72) Inventor: SAKUMA, Katsuyoshi, Kitaibaraki-shi Ibaraki 319-1535 (JP)
(74) Representative: TBK
(86) International application number: PCT/JP2016/085560
(87) International publication number: WO 2017/094779

(57) **Abstract**

A shaft and a sealing structure that can reduce the sliding resistance of a seal ring regardless of whether the side surface of the seal ring wears out over time. A shaft 200 rotates relative to a housing 300 and includes an annular groove 210 on an outer periphery side thereof, to which a resinous seal ring 400 that seals an annular gap between the shaft 200 and the housing 300 to maintain pressure of sealed fluid, is attached. In the shaft 200, a side wall surface 213 of the annular groove 210 on which the seal ring 400 slides is made of metal, and dynamic pressure generation grooves 220 that generate dynamic pressure by the sealed fluid guided during the relative rotation are formed on the side wall surface 213.

## Description

### [Technical Field]

The present invention relates to a shaft that rotates relative to a housing, and a sealing structure that seals an annular gap between a housing and a shaft rotating relative to each other.

### [Background Art]

Conventionally, a resinous seal ring that seals the annular gap between a shaft and a housing rotating relative to each other has been used in an Automatic Transmission (AT) or a Continuously Variable Transmission (CVT) for an automobile to maintain hydraulic pressure. Generally, such a type of seal ring is attached to an annular groove provided on the outer periphery side of a shaft to bring its outer peripheral surface into close contact with the inner peripheral surface of the shaft hole of a housing while bringing a side surface on its one side (an end surface on one side in an axial direction) into close contact with the side wall surface of the annular groove to seal the annular gap between the shaft and the housing. Here, in a so-called side surface sliding type seal ring, i.e., a seal ring sliding with its side surface brought into close contact with the side wall surface of an annular groove, there has been known a technology to form concaves, in which sealed fluid is guided to generate dynamic pressure, on the side surface to reduce the sliding resistance between the side surface and the side wall surface of the annular groove (see PTL 1).

### [Citation List]

### [Patent Literature]

[PTL 1]
WO 2011/105513

### [Summary of Invention]

### [Technical Problem]

When a seal ring is made of resin, the sliding surface of the seal ring could wear out with time. Accordingly, when the concaves as disclosed in the above related art are formed on the side surface of a resinous seal ring, the shape of the concaves could be changed as the side surface wears out with time. Particularly, since the concaves could be made gradually shallower, the effect of reducing sliding resistance by the concaves could be gradually declined.

In view of the above problems, it is an object of the present invention to provide a shaft and a sealing structure that can reduce the sliding resistance of a seal ring regardless of whether the side surface of the seal ring wears out with time.

### [Solution to Problem]

The present invention employs the following means for solving the above problems.

That is, the present invention provides a shaft configured to be inserted in a shaft hole provided in a housing and rotating relative to the housing, the shaft including: an annular groove provided on an outer periphery side thereof, the annular groove being configured so that a resinous seal ring that seals an annular gap between the shaft and the housing to maintain pressure of sealed fluid is attached to the annular groove, wherein a side wall surface of the annular groove configured so that the seal ring slides on the side wall is made of metal, and dynamic pressure generation grooves configured to generate dynamic pressure by the sealed fluid, which is guided when the housing and the shaft rotate relative to each other, are formed on the side wall surface.

According to the shaft of the present invention, some of the pressure of sealed fluid that presses a seal ring against the side wall surface is cancelled by dynamic pressure generated in the dynamic pressure generation grooves formed on the side wall surface of the annular groove. Thus, the sliding resistance of the seal ring against the side wall surface is reduced. Since the side wall surface of the annular groove is constituted by metal, the side wall surface hardly wears out even if a resinous seal ring slides on the side wall surface. Therefore, since a change in the shape of the dynamic pressure generation grooves formed on the side wall surface due to wear-out thereof is prevented, the declination of the effect of reducing the sliding resistance by the dynamic pressure generation grooves is also prevented. Particularly, even if the side surface of the seal ring wears out with time, the effect of reducing the sliding resistance by the dynamic pressure generation grooves is not declined. Thus, according to the present invention, the sliding resistance of the seal ring can be reduced regardless of whether the side surface of the seal ring wears out with time.

The shaft according to the present invention may include a metal annular member that constitutes the side wall surface of the annular groove. By the employment of such a configuration, it becomes possible to constitute the side wall surface of the annular groove, for example, when the annular member on which dynamic pressure generation grooves are formed in advance is attached to the shaft. Accordingly, compared with a case in which dynamic pressure generation grooves are formed on the side wall surface of the annular groove constituted on the shaft in advance, the formation of the dynamic pressure generation grooves is made easier.

The dynamic pressure generation grooves may have a first groove that extends in a circumferential direction thereof, and a second groove that extends radially inward from a center in the circumferential direction of the first groove and is configured to guide the sealed fluid into the first groove. Thus, the dynamic pressure generation grooves can generate dynamic pressure regardless of the relative rotating direction of the shaft. Further, since sealed fluid guided into the first groove is prevented from leaking out in the radial direction (in the width direction of the first groove), dynamic pressure can be effectively generated.

The present invention provides a sealing structure including: a housing in which a shaft hole is provided; a shaft inserted in the shaft hole and rotating relative to the housing, the shaft having an annular groove on an outer periphery side thereof; and a resinous seal ring attached to the annular groove, the seal ring sealing an annular gap between the shaft and the housing to maintain pressure of sealed fluid, wherein a side wall surface of the annular groove on which the seal ring slides is made of metal, and dynamic pressure generation grooves configured to generate dynamic pressure by the sealed fluid, which is guided when the housing and the shaft rotate relative to each other, are formed on the side wall surface.

In the sealing structure according to the present invention as well, the sliding resistance of a seal ring can be reduced regardless of whether the side surface of the seal ring wears out with time like the above described shaft according to the present invention.

The sealing structure according to the present invention may include a metal annular member constituting the side wall surface of the annular groove. Further, the dynamic pressure generation grooves may have a first groove that extends in a circumferential direction thereof, and a second groove that extends radially inward from a center in the circumferential direction of the first groove and is configured to guide the sealed fluid into the first groove. In any of the cases, the same effects as those of the above described shaft according to the present invention are achieved.

The present invention can also be understood as an annular member or a sealing unit configured to be attached to an annular groove provided on the outer periphery side of a shaft.

That is, the present invention provides an annular member configured to be fixed in an annular groove provided on an outer periphery side of a shaft, which is inserted in a shaft hole provided in a housing and rotates relative to the housing, and to which a resinous seal ring that seals an annular gap between the shaft and the housing to maintain pressure of sealed fluid is attached, the annular member including: a sliding surface configured so that a side surface of the seal ring slides on the sliding surface, wherein the sliding surface is made of metal, and dynamic pressure generation grooves configured to generate dynamic pressure by the sealed fluid, which is guided when the housing and the shaft rotate relative to each other, are formed on the sliding surface.

The present invention provides a sealing unit configured to seal an annular gap between a housing in which a shaft hole is provided and a shaft that is inserted in the shaft hole and rotates relative to the housing to maintain pressure of sealed fluid, the sealing unit being configured to be attached to an annular groove formed on an outer periphery side of the shaft, the sealing unit including: a resinous seal ring configured to seal the annular gap to maintain pressure of the sealed fluid; and an annular member that has a sliding surface configured so that a side surface of the seal ring slides on the sliding surface and configured to be fixed to the annular groove, wherein the sliding surface is made of metal, and dynamic pressure generation grooves configured to generate dynamic pressure by the sealed fluid, which is guided when the housing and the shaft rotate relative to each other, are formed on the sliding surface.

In any of the inventions, the sliding resistance of the seal ring can be reduced regardless of whether the side surface of the seal ring wears out with time like the above described shaft and the sealing structure according to the present invention.

### [Advantageous Effects of Invention]

According to the present invention, the sliding resistance of a seal ring can be reduced regardless of whether the side surface of the seal ring wears out with time as described above.

### [Brief Description of Drawings]

[Fig. 1]

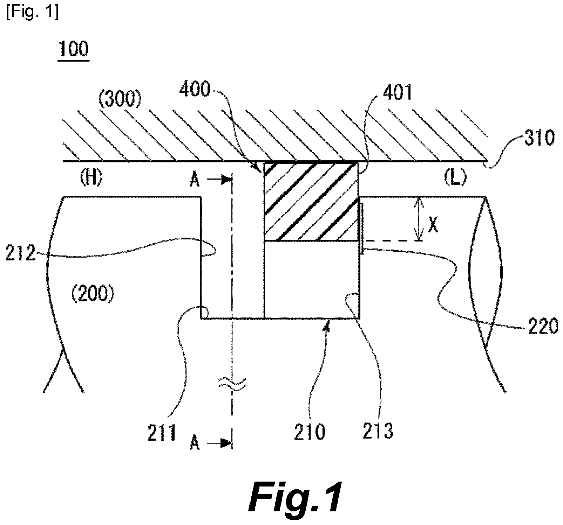

   Fig. 1 is a schematic cross sectional view showing a state in which a shaft according to a first example is in use.
[Fig. 2]

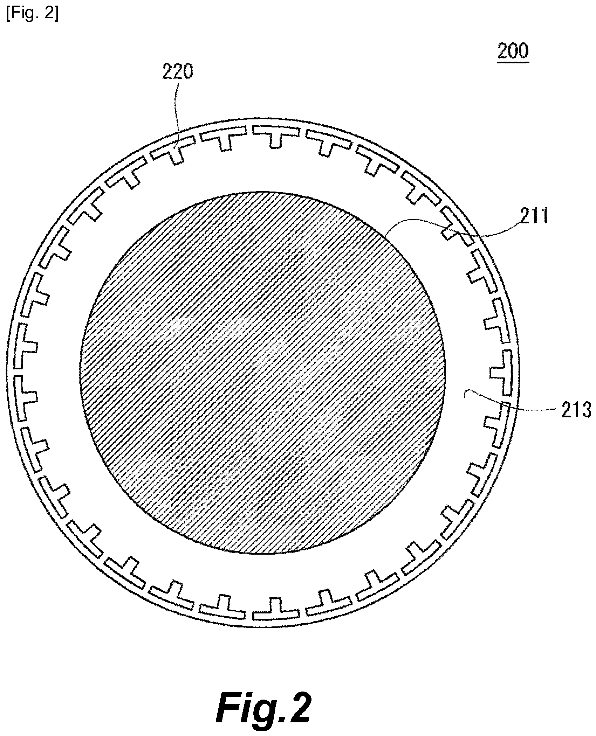

   Fig. 2 is a cross-sectional view of the shaft according to the first example.
[Fig. 3]

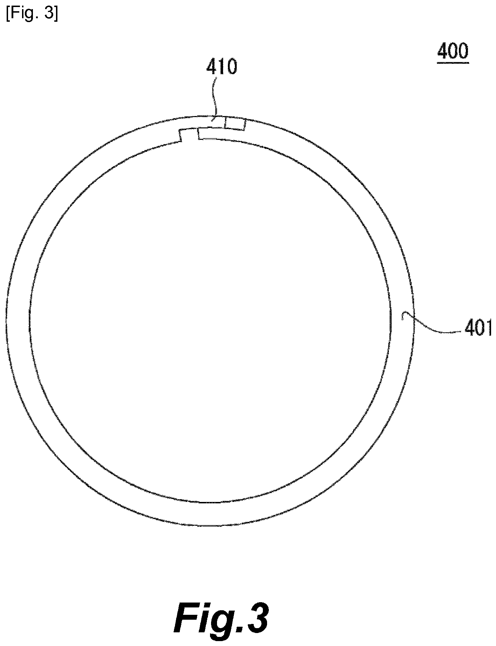

   Fig. 3 is a side view of the seal ring according to the first example.
[Fig. 4]

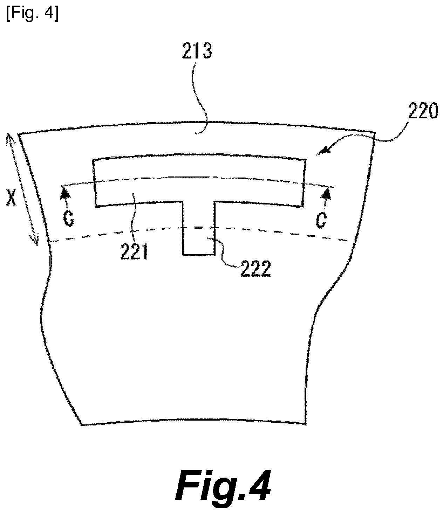

   Fig. 4 is a partially enlarged view of the side wall surface of an annular groove according to the first example.
[Fig. 5]

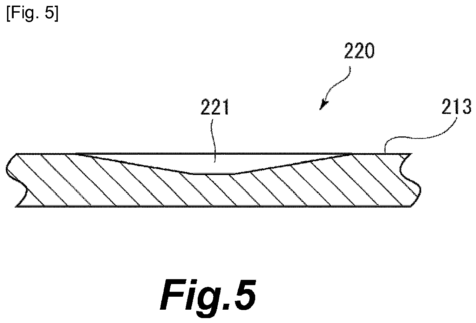

   Fig. 5 is a schematic cross-sectional view of a dynamic pressure generation groove according to the first example.
[Fig. 6]

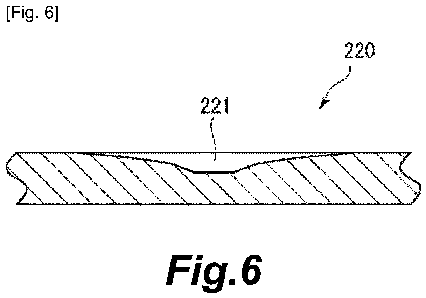

   Fig. 6 is a schematic cross-sectional view showing another shape of the dynamic pressure generation groove according to the first example.
[Fig. 7]

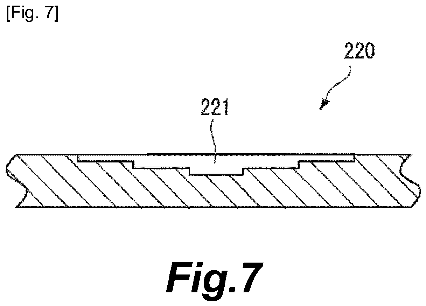

   Fig. 7 is a schematic cross-sectional view showing another shape of the dynamic pressure generation groove according to the first example.
[Fig. 8]

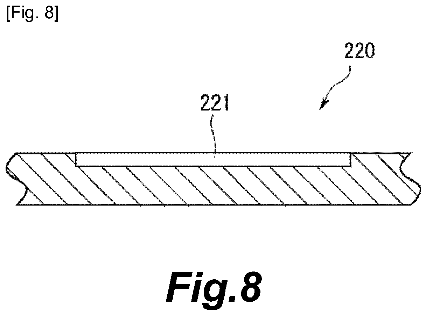

   Fig. 8 is a schematic cross-sectional view showing another shape of the dynamic pressure generation groove according to the first example.
[Fig. 9]

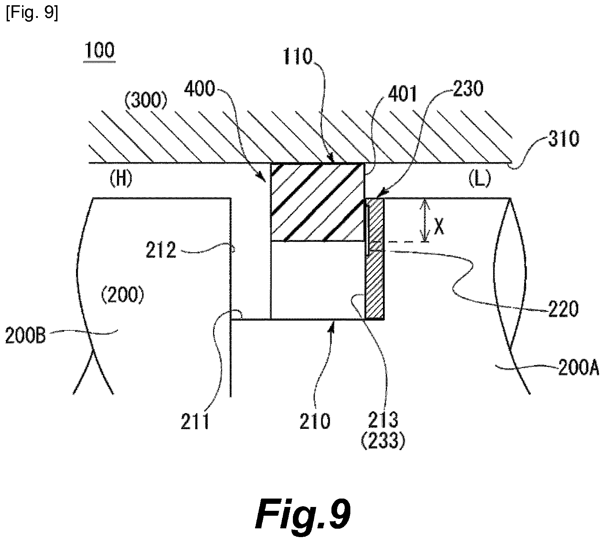

   Fig. 9 is a schematic cross-sectional view showing a state in which a shaft according to a second example is in use.
[Fig. 10]

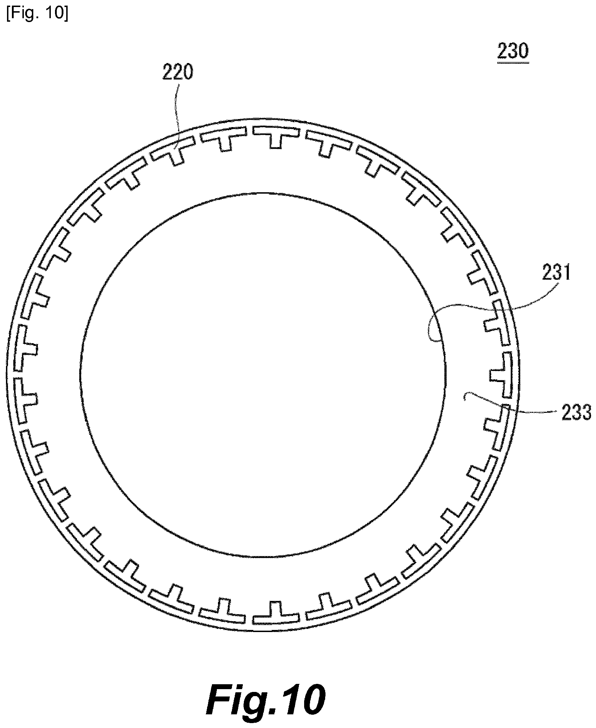

   Fig. 10 is a side view of an annular member according to the second example.

### [Description of Embodiments]

Hereinafter, with reference to the drawings, embodiments for carrying out the present invention will be illustratively described in detail based on examples. However, dimensions, materials, shapes, their relative arrangements, or the like of components described in the examples do not intend to limit the scope of the present invention unless otherwise specifically described. Note that the shaft according to the present examples is used in a transmission such as an AT and a CVT for an automobile, inserted in the shaft hole of a housing, and rotates relative to the housing. The shaft is provided with an annular groove on its outer periphery side, and a sealing unit such as a seal ring is attached to the groove. Note that in the present examples, sealed fluid is operating oil for a transmission. In the following description, when there is a difference in pressures between both sides of the seal ring, a "higher pressure side" and a "lower pressure side" indicate a side where hydraulic pressure becomes higher and a side where the hydraulic pressure becomes lower, respectively.

### <First Example>

A shaft and a sealing structure according to a first example of the present invention will be described with reference to Figs. 1 to 5. Fig. 1 is a schematic cross-sectional view showing a state in which the shaft according to the first example is in use. Fig. 2 is a cross-sectional view (an A-A cross section in Fig. 1) of the shaft according to the first example in which the configuration of the side wall surface of an annular groove is shown. Fig. 3 is a side view of a seal ring attached to the shaft according to the first example. Fig. 4 is a partially enlarged view of the side wall surface of the annular groove shown in Fig. 2. Fig. 5 is a schematic cross-sectional view of a dynamic pressure generation groove provided on the side wall surface in which a C-C cross section in Fig. 4 is shown.

### <Configurations of Shaft and Sealing Structure>

As shown in Fig. 1, a sealing structure 100 according to the first example is constituted by a housing 300 provided with a shaft hole 310, a metal shaft 200 that is inserted in the shaft hole 310 and rotates relative to the housing 300, and a resinous seal ring 400 attached to an annular groove 210 provided on the outer periphery side of the shaft 200.

The seal ring 400 seals the annular gap between the inner peripheral surface of the shaft hole 310 and the outer peripheral surface of the shaft 200 to maintain the pressure of operating oil on a higher pressure side H on a left side in the figure. That is, a region on the higher pressure side H is a sealed region in the present example. The seal ring 400 is made of resin material such as polyether ether ketone (PEEK), polyphenylenesulfide (PPS), and polytetrafluoroethylene (PTFE). As shown in Fig. 3, the seal ring 400 includes an abutment joint 410 at one portion in its circumferential direction, and is divided by the abutment joint 410. In the present example, as shown in Fig. 3, the abutment joint 410 employs a so-called special step cut with which the abutment joint 410 is cut off in a staircase pattern when seen from any of the outer peripheral surface and the both side surfaces. The special step cut is a known technology, and thus its detailed description will be omitted. However, the special step cut has the property of maintaining stable sealing performance even if the circumferential length of the seal ring 400 changes due to its thermal expansion and contraction. The shape of the special step cut in the seal ring 400 is molded by injection molding. Note that the special step cut is employed as an example of the abutment joint 410 in the present example. The abutment joint 410 is not limited to the special step cut, and may employ a straight cut, a bias cut, or the like so long as desired sealing performance is exhibited. Note that a side surface 401 (an end surface in the axial direction) of the seal ring 400 is formed to be flat except for the abutment joint 410 as shown in Fig. 3. The other side surface of the seal ring 400 is similarly formed.

The annular groove 210 formed on the shaft 200 has a groove bottom 211, a side wall surface 212 on the higher pressure side H (the left side in the figure) and a side wall surface 213 on a lower pressure side L (a right side in the figure). As shown in Fig. 2, a plurality of (29 in the present example) dynamic pressure generation grooves 220 is formed on the side wall surface 213 at even intervals in the circumferential direction. As will be described in detail later, dynamic pressure is generated as the operating oil flows into the dynamic pressure generation grooves 220 when the side surface of the seal ring 400 slides on the side wall surface 213. As shown in Fig. 4, the dynamic pressure generation grooves 220 are constituted by a first groove 221 having a constant width in its radial direction and extending in the circumferential direction, and a second groove 222 extending radially inward from the center in the circumferential direction of the first groove 221 and guiding the sealed fluid into the first groove 221.

The first grooves 221 are provided at a position falling within a sliding region X in which the side surface of the seal ring 400 slides (see Figs. 1 and 4). As shown in Fig. 5 in which a C-C cross section in Fig. 4 is shown, the first grooves 221 are configured to have a depth in the circumferential direction made constant at their central part but gradually made shallower toward their both ends flatly. On the other hand, as shown in Fig. 4, the second grooves 222 extend radially inward beyond the sliding region X. Note that in the present example, the dynamic pressure generation grooves 220 are formed by directly applying working such as cutting to the side wall surface 213 of the annular groove 210.

### <Mechanism Where Shaft and Sealing Structure are in Use>

A mechanism where the shaft 200 and the sealing structure 100 according to the present example are in use will be described with particular reference to Fig. 1. Fig. 1 shows a state in which there is a difference in pressures between two regions partitioned by the seal ring 400 and pressure on the higher pressure side H becomes higher with the start of the engine of an automobile. Due to the differential pressure, fluid pressure (hydraulic pressure) acts on the side surface on the higher pressure side H and the inner peripheral surface of the seal ring 400. By the fluid pressure, the seal ring 400 is brought into close contact with the inner peripheral surface of the shaft hole 310 of the housing 300 and the side wall surface 213 on the lower pressure side L of the annular groove 210. Thus, since a sealing surface is formed between the outer peripheral surface of the seal ring 400 and the inner peripheral surface of the shaft hole 310 and between the side surface 401 of the seal ring 400 and the side wall surface 213 on the lower pressure side L, the annular gap between the shaft 200 and the housing 300 is sealed to maintain hydraulic pressure.

In the present example, at least the side surface 401 of the seal ring 400 is configured to rotate and slide on the side wall surface 213 when the shaft 200 and the housing 300 rotate relative to each other. Accordingly, during the rotation, the operating oil flows into the second grooves 222 from the radially inward parts beyond the sliding region X. The operating oil flowing into the second grooves 222 is guided into the first grooves 221, flows in the circumferential direction inside the first grooves 221 and then flows out to the area between the sliding surfaces 401 and 213, thereby dynamic pressure is generated. Note that when the seal ring 400 rotates in a clockwise direction in Fig. 2 relative to the side wall surface 213, the operating oil flows out from the ends on the clockwise direction side of the first grooves 221. On the other hand, when the seal ring 400 rotates in a counterclockwise direction in Fig. 2 relative to the side wall surface 213, the operating oil flows out from the ends on the counterclockwise direction side of the first grooves 221.

### <Excellent Point of Sealing Unit According to Present Example>

In the shaft 200 and the sealing structure 100 according to the present example, the operating oil is guided into the dynamic pressure generation grooves 220. Therefore, the pressure of the operating oil acting on the seal ring 400 from the lower pressure side and some of the pressure of the operating oil acting on the seal ring 400 from the higher pressure side cancel each other. Thus, a pressing force toward the side wall surface 213 (toward the lower pressure side L) acting on the seal ring 400 is reduced. When the seal ring 400 slides on the side wall surface 213, dynamic pressure is generated as the operating oil flows out from the first grooves 221 to the area between the sliding surfaces. By the dynamic pressure, a force opposite the side wall surface 213 acts on the seal ring 400. Thus, since the pressing force toward the side wall surface 213 is reduced while the force opposite the side wall surface 213 is generated, the sliding resistance of the seal ring 400 to the side wall surface 213 is effectively reduced. Since the reduction of the sliding resistance makes it possible to reduce heat generation resulting from the sliding, the seal ring 400 can be properly used under a high speed and high pressure environmental condition is allowed.

Since the shaft 200 is made of metal, the side wall surface 213 of the annular groove 210 is also constituted by metal. Therefore, the side wall surface 213 is not likely to wear out even if the resinous seal ring 400 having relatively low rigidity slides on the side wall surface 213. Consequently, since a change in the shape of the dynamic pressure generation grooves 220 formed on the side wall surface 213 due to the sliding is prevented, the effect of reducing the sliding resistance by the dynamic pressure generation grooves 220 is also prevented from declining. Note that since the shape of the dynamic pressure generation grooves 220 actually hardly changes and is not made shallow, the effect of reducing the sliding resistance hardly declines. Particularly, since the side wall surface 213 hardly wears out even if the resinous seal ring 400 wears out with time, the effect of reducing the sliding resistance by the dynamic pressure generation grooves 220 is hardly declined. Thus, according to the shaft 200 and the sealing structure 100, the sliding resistance of the seal ring 400 can be reduced regardless of whether the side surface of the seal ring 400 wears out with time.

Since the dynamic pressure generation grooves 220 are constituted by the first groove 221 and the second groove 222 extending radially inward from the center in the circumferential direction of the first groove 221, the above described dynamic pressure is generated regardless of the rotating direction of the seal ring 400 relative to the side wall surface 213. Since the first grooves 221 are formed to have wall surfaces on the inside and the outside in the radial direction and thus prevent the leakage of the operating oil guided into the first grooves 221 in the radial direction, the first grooves 221 can effectively generate dynamic pressure. Note that since the first grooves 221 are provided at the position falling within the sliding region X in which the side surface of the seal ring 400 slides, the sealed fluid guided into the first grooves 221 is further prevented from flowing out in the radial direction. The first grooves 221 are configured to have a depth in the circumferential direction made gradually shallower toward both ends. Therefore, it becomes possible to effectively generate the above described dynamic pressure with a so-called wedge effect. Further, since the second grooves 222 are formed to extend radially inward beyond the sliding region X, the operating oil can be effectively guided into the inside even if the shaft 200 relatively rotates.

According to the present example, since the dynamic pressure generation grooves 220 are provided on the side wall surface 213, both side surfaces of the seal ring 400 can be flattened. Accordingly, since there is no need to consider a direction when the seal ring 400 is attached to the annular groove 210, working efficiency is improved.

Although the dynamic pressure generation grooves 220 are provided only on the side wall surface 213 on one side of the annular groove 210 in the present example, the dynamic pressure generation grooves 220 may be formed on the side wall surface 212 on the other side as well. In this case, it becomes possible to reduce the sliding resistance acting on the seal ring 400 even in a configuration in which the magnitude relation of the pressure between the two regions partitioned by the seal ring 400 changes.

### <Other Examples of Shapes of Dynamic Pressure Generation Grooves>

Other shapes of the dynamic pressure generation grooves 220 will be described with reference to Figs. 6 to 8. Figs. 6 to 8 are diagrams corresponding to the C-C cross section in Fig. 4, similarly to Fig.5. Figs. 6 and 7 show other examples of the groove bottoms of the first grooves 221 configured to be made shallower toward their both-end sides than at their central part in the circumferential direction. Fig. 6 shows an example of a groove bottom made gradually shallower like a curved surface from its central part in the circumferential direction toward its both sides. Fig. 7 shows an example a groove bottom made shallower in a staircase pattern from its central part in the circumferential direction toward its both sides. In any of the shapes, dynamic pressure can be effectively generated based on a wedge effect. Note that even in a case in which the first grooves 221 are configured to have the depth of a groove bottom made constant in the circumferential direction as shown in Fig. 8, it is possible to generate dynamic pressure to some extent.

### <Second Example>

A shaft and a sealing structure according to a second example of the present invention will be described with reference to Figs. 9 and 10. The second example is different from the above first example in that the shaft additionally includes a metal annular member constituting a side wall surface on which dynamic pressure generation grooves are formed. Note that the same components as those of the first example will be denoted by the same reference signs and their descriptions will be omitted. The functions of the same components are also substantially the same. Note that Fig. 9 is a schematic cross-sectional view showing a state in which the shaft according to the second example is in use. Fig. 10 is a side view of the annular member of the shaft according to the second example in which a side surface on which the dynamic pressure generation grooves are formed is shown.

As shown in Fig. 9, a shaft 200 according to the second example includes a metal annular member 230 constituting a side wall surface 213 of an annular groove 210. A side surface 233 on a higher pressure side H of the annular member 230 fixed at a position closer to a lower pressure side L inside the annular groove 210 constitutes the side wall surface 213 of the annular groove 210. Note that as shown in Fig. 10, a plurality of dynamic pressure generation grooves 220 is formed on the side surface 233 on one side of the annular member 230 like the side wall surface 213 of the first example. Since the shape and operation of the dynamic pressure generation grooves 220 formed on the annular member 230 are the same as those of the first example, their descriptions will be omitted. Note that in the present example as well, the dynamic pressure generation grooves 220 are formed by directly applying working such as cutting to the side surface 233.

Note that a shaft hole 231 of the annular member 230 is configured to have an inside diameter substantially the same as the outside diameter of a groove bottom 211 of the annular groove 210. Thus, the annular member 230 can be fixed to the shaft 200 when the shaft hole 231 and the groove bottom 211 of the shaft 200 are fitted to each other. Note that as shown in Fig. 9, the shaft 200 according to the present example is constituted by two detachable shaft parts 200A and 200B. The shaft part 200A and the shaft part 200B are combined together after the annular member 230 is fixed to the groove bottom 211 formed on the shaft part 200A, whereby it becomes possible to attach the annular member 230 having no cutting part to the shaft 200.

Note that in the present example, a seal ring 400 and the annular member 230 function as a sealing unit 110 that seals the annular gap between a housing 300 and the shaft 200 to maintain the pressure of operating oil.

### <Mechanism Where Shaft and Sealing Structure are in use>

A mechanism where the shaft 200 and the sealing structure 100 according to the present example are in use will be described with particular reference to Fig. 9. Fig. 9 shows a state in which pressure on the higher pressure side H becomes higher like the above described first example, and the seal ring 400 is brought into close contact with the inner peripheral surface of the shaft hole 310 of the housing 300 and the side wall surface 213 on the lower pressure side L of the annular groove 210, i.e., the side surface 233 of the annular member 230. Thus, the annular gap between the shaft 200 and the housing 300 is sealed to maintain hydraulic pressure. In the present example as well, at least the side surface 401 of the seal ring 400 is configured to rotate and slide on the side surface 233 when the shaft 200 and the housing 300 rotate relative to each other. Therefore, since the operating oil flows into the dynamic pressure generation grooves 220 during the rotation, dynamic pressure is generated between the sliding surfaces 401 and 233.

### <Excellent Point of Sealing Unit According to Present Example>

In the shaft 200 and the sealing structure 100 according to the present example, the same functions and effects as those of the above described first example are exhibited. Note that in the present example, the side wall surface 213 of the annular groove 210 is constituted by the metal annular member 230 that is a component separate from the shaft 200. Therefore, in the present example, the annular member 230 is attached to the shaft 200 after the dynamic pressure generation grooves 220 are formed on the side surface 233 in advance, whereby it becomes possible to constitute the side wall surface 213 of the annular groove 210. Accordingly, compared with a configuration in which the dynamic pressure generation grooves 220 are directly formed on the side wall surface 213 of the annular groove 210 formed on the metal shaft 200 as in the above described first example, operation of forming the dynamic pressure generation grooves 220 is made easier. Since the annular member 230 is made of metal and thus it becomes possible to use other materials as the shaft 200, flexibility in design is increased.

Note that the effects produced by the present example can be understood as being produced by the annular member 230 itself or the sealing unit 110 including the seal ring 400 and the annular member 230.

Although only the side wall surface 213 on one side of the annular groove 210 is constituted by the annular member 230 in the present example, the side wall surface 212 on the other side thereof may also be constituted by the annular member 230. In this case, the annular member 230 is fixed so that the side surface 233, on which the dynamic pressure generation grooves 220 are formed, faces the inside of the annular groove 210. When such a configuration is adapted, it becomes possible to reduce sliding resistance acting on the seal ring 400 even in a state in which the magnitude relation of the pressure between the two regions partitioned by the seal ring 400 changes.

### <Other>

The shapes of the dynamic pressure generation grooves 220 are not limited to the above described shapes, but other shapes can be appropriately employed. The object of the present invention can be achieved if the annular member 230 of the above described second example is made of metal at least in a part constituting the side wall surface 213 of the annular groove 210. Accordingly, the annular member 230 is not limited to the above described configuration where whole part is made of metal, but may be configured to be made of metal only in a part constituting the side wall surface 213 (a part sliding with respect to the seal ring 400) and the other part is made of other materials.

The above described example describes a configuration in which the side wall surface of the annular groove is made of metal, but the side wall surface may be made of other materials so long as the antiwear function against the sliding of the seal ring is assured.

### [Reference Signs List]

100 Sealing structure
110 Sealing unit
200 Shaft
200A, 200B Shaft part
210 Annular groove
211 Groove bottom
212, 213 Side wall surface
220 Dynamic pressure generation groove
221 First groove
222 Second groove
230 Annular member
231 Shaft hole
233 Side surface
300 Housing
310 Shaft hole
400 Seal ring
401 Side surface
410 Abutment joint
H Higher pressure side
L Lower pressure side
X Sliding region

## Claims

1. A shaft configured to be inserted in a shaft hole provided in a housing and rotating relative to the housing, the shaft comprising an annular groove provided on an outer periphery side thereof, the annular groove being configured so that a resinous seal ring that seals an annular gap between the shaft and the housing to maintain pressure of sealed fluid is attached to the annular groove, wherein
a side wall surface of the annular groove configured so that the seal ring slides on the side wall is made of metal, and
dynamic pressure generation grooves configured to generate dynamic pressure by the sealed fluid, which is guided when the housing and the shaft rotate relative to each other, are formed on the side wall surface.

2. The shaft according to claim 1, comprising:
a metal annular member that constitutes the side wall surface of the annular groove.

3. The shaft according to claim 1 or 2, wherein the dynamic pressure generation grooves include:
a first groove that extends in a circumferential direction thereof, and
a second groove that extends radially inward from a center in the circumferential direction of the first groove and is configured to guide the sealed fluid into the first groove.

4. A sealing structure comprising:
a housing in which a shaft hole is provided;
a shaft inserted in the shaft hole and rotating relative to the housing, the shaft having an annular groove on an outer periphery side thereof; and
a resinous seal ring attached to the annular groove, the seal ring sealing an annular gap between the shaft and the housing to maintain pressure of sealed fluid,
wherein
a side wall surface of the annular groove on which the seal ring slides is made of metal, and
dynamic pressure generation grooves configured to generate dynamic pressure by the sealed fluid, which is guided when the housing and the shaft rotate relative to each other, are formed on the side wall surface.

5. The sealing structure according to claim 4, comprising a metal annular member constituting the side wall surface of the annular groove.

6. The sealing structure according to claim 4 or 5, wherein
the dynamic pressure generation grooves include:
a first groove that extends in a circumferential direction thereof, and
a second groove that extends radially inward from a center in the circumferential direction of the first groove and is configured to guide the sealed fluid into the first groove.

7. An annular member configured to be fixed in an annular groove provided on an outer periphery side of a shaft, which is inserted in a shaft hole provided in a housing and rotates relative to the housing, and to which a resinous seal ring that seals an annular gap between the shaft and the housing to maintain pressure of sealed fluid is attached,
the annular member comprising a sliding surface configured so that a side surface of the seal ring slides on the sliding surface, wherein
the sliding surface is made of metal, and
dynamic pressure generation grooves configured to generate dynamic pressure by the sealed fluid, which is guided when the housing and the shaft rotate relative to each other, are formed on the sliding surface.

8. A sealing unit configured to seal an annular gap between a housing in which a shaft hole is provided and a shaft that is inserted in the shaft hole and rotates relative to the housing to maintain pressure of sealed fluid, the sealing unit being configured to be attached to an annular groove formed on an outer periphery side of the shaft,
the sealing unit comprising:
a resinous seal ring configured to seal the annular gap to maintain pressure of the sealed fluid; and
an annular member that has a sliding surface configured so that a side surface of the seal ring slides on the sliding surface and configured to be fixed to the annular groove, wherein
the sliding surface is made of metal, and
dynamic pressure generation grooves configured to generate dynamic pressure by the sealed fluid, which is guided when the housing and the shaft rotate relative to each other, are formed on the sliding surface.
